# DEMANDE DE BREVET EUROPEEN

(11) **EP 2 407 921 A1**
(43) Date de publication de la demande: **18.01.2012**
(21) Numéro de dépôt: 11172935.6
(22) Date de dépôt: 06.07.2011
(51) Int. Cl.: G06Q 30/00

(54) **Procédé de compression de données pour un classifieur**

(30) Priorité: 16.07.2010 FR 1003008
(71) Demandeur: ACT750, 38000 Grenoble (FR)
(72) Inventeur: Paillet, Bruno, 38700 LA TRONCHE (FR); Duclos, Frédéric, 38100 GRENOBLE (FR)
(74) Mandataire: de Jong, Jean Jacques

(57) **Abrégé**

L'invention est relative à un procédé de classification d'un échantillon de valeurs liées à l'utilisation d'un serveur (10), comprenant les étapes consistant à enregistrer par le serveur des événements d'utilisation dans un journal (12) ; paramétrer un outil classifieur (16) avec un modèle comportemental formé d'une liste pondérée de paramètres ; établir l'échantillon de valeurs à partir du journal et le fournir comme paramètres à l'outil classifieur, d'où il résulte que l'outil classifieur calcule un score (18) représentatif de l'adéquation de l'échantillon à une catégorie cible ; lire des événements d'utilisation récents enregistrés dans le journal (12) et les agréger sur des intervalles temporels élémentaires (J) ; stocker dans une base de données (22) le résultat d'agrégation obtenu pour chaque intervalle élémentaire dans un enregistrement distinct d'un premier groupe ; lorsque le nombre d'enregistrements du premier groupe atteint un seuil, agréger les contenus des enregistrements du premier groupe dans un enregistrement distinct (W) d'un deuxième groupe de la base de données ; et établir l'échantillon de valeurs fourni à l'outil classifieur (16) à partir des contenus des enregistrements (J, W, M) de la base de données.

## Description

### Domaine technique de l'invention

L'invention est relative au traitement d'un journal d'événements par un classifieur, notamment dans le cas où le journal contient une quantité de données très élevée, de l'ordre de plusieurs téraoctets.

### État de la technique

Un « classifieur » est un outil logiciel généralement basé sur les réseaux neuronaux, ayant des capacités d'apprentissage. Un classifieur est alimenté avec des échantillons successifs d'une liste de paramètres. Pour chaque échantillon, le classifieur calcule un score représentatif de l'adéquation de l'échantillon à une ou plusieurs catégories cible. Dans un mode d'apprentissage, on fournit au classifieur des échantillons de référence avec les catégories attendues correspondantes. Le classifieur réajuste alors son réseau neuronal pour faire tendre les scores vers les catégories attendues pour ces échantillons de référence.

Un exemple courant de classifieur est le filtre de courriels indésirables (« anti spam »), le plus souvent un filtre dit bayesien. D'autres classifieurs à usage plus général existent sous la dénomination « outil d'exploration de données » (« Data Mining »). On trouve des exemples de tels outils sous les dénominations commerciales « SAS Enterprise Miner », KXEN, et SPSS.

Les outils d'exploration de données peuvent être utilisés pour tirer des informations utiles de banques de données de taille immense (plusieurs téraoctets). Ces banques de données conservent généralement les données sous une forme peu exploitable par un classifieur. Les données doivent donc être triées et reformatées - la masse de données est telle que la durée des opérations de tri et de reformatage est prépondérante par rapport à la durée requise pour les traiter par le classifieur.

Pour illustrer ce problème plus concrètement, on se place ci-après dans le cadre d'un exemple particulier. Les opérateurs de services téléphoniques souhaitent estimer le risque d'attrition de leurs abonnés, c'est-à-dire le risque pour que les abonnés changent d'opérateur. On appelle cela couramment le « churn prediction » (du terme anglais « CHange and tURN »).

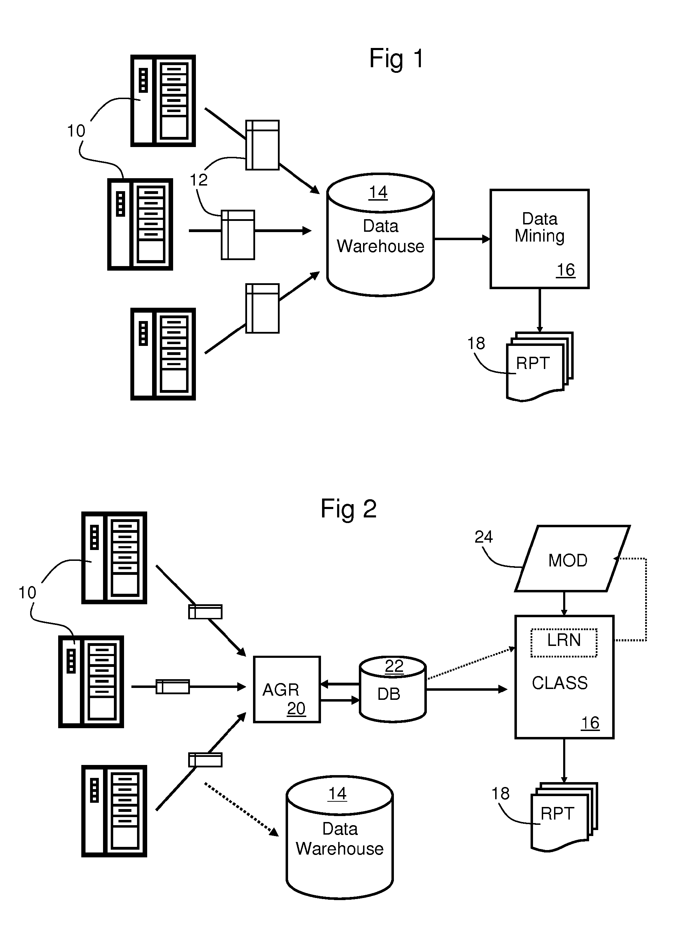

La figure 1 représente schématiquement un environnement d'application classique d'un outil d'analyse, tel que décrit dans la demande de brevet US20070156673.

Plusieurs serveurs 10, participant à dispenser les services d'appel aux abonnés, mettent à jour un historique interne, sous la forme d'un journal de « tickets d'appel » (aussi appelés CDR - de l'anglais « Call Data Record »). Un ticket d'appel est généré pour chaque appel émis par un abonné, et contient de nombreuses informations, telles que la date et la durée de l'appel, le numéro appelé, le temps restant sur la période d'abonnement ou sur une recharge, etc.

Les journaux 12 de chaque serveur 10 sont régulièrement sauvegardés dans une base de données centrale 14, appelée entrepôt de données (« data warehouse » ou « data mart »). C'est à partir de cet entrepôt que travaille l'outil d'analyse ou classifieur 16.

L'outil 16 est prévu pour accepter une multitude de paramètres en entrée et fournir un rapport 18 pour chaque échantillon de valeurs des paramètres, chaque échantillon correspondant à un abonné différent. L'outil d'analyse 16 étant générique, la nature des paramètres, leur influence sur les rapports, et le contenu des rapports sont paramétrables pour adapter l'outil à la fonctionnalité souhaitée.

Les rapports 18 sont notamment prévus pour afficher un score par abonné, correspondant à la probabilité d'attrition estimée.

L'outil d'exploration de données 16 ne peut pas travailler à partir des données brutes contenues dans l'entrepôt 14. On doit ainsi extraire ces données et les retravailler pour qu'elles aient une signification pratique exploitable par l'outil 16. On doit notamment établir des informations statistiques, telles que des moyennes et des tendances, qui doivent être calculées sur un nombre important de tickets d'appel par abonné.

Le nombre d'abonnés d'un opérateur téléphonique se comptant par millions, le volume de données contenues dans l'entrepôt 14 est immense. Par exemple, pour un opérateur téléphonique comportant quelques millions d'abonnés, une année de tickets d'appel correspond à plusieurs téraoctets de données stockés dans l'entrepôt 14. Il faut plusieurs jours, même avec les équipements les plus puissants, pour extraire ces données et les retravailler afin de dresser un seul rapport 18 pour l'ensemble des abonnés.

Par ailleurs, l'outil 16 doit être paramétré pour que les estimations qu'il produit tendent vers la réalité. L'outil 16 opère à partir d'un modèle comportemental, généralement sous la forme d'une liste pondérée de paramètres. Un modèle particulier est élaboré à partir du type de service offert et d'un comportement que l'on souhaite détecter, comportement qui se veut commun aux abonnés sur le point de quitter l'opérateur, par exemple.

Toutefois les habitudes des abonnés ont tendance à évoluer pour leurs raisons propres ou sous l'influence d'offres concurrentes, d'où il résulte que le modèle comportemental doit sans cesse être réajusté. Etant donné le temps que prend l'établissement d'un rapport, il est peu commode d'effectuer des essais successifs en faisant varier les paramètres et d'utiliser les fonctionnalités d'apprentissage qu'offrent les outils d'exploration de données.

### Résumé de l'invention

On constate qu'on a besoin d'un système utilisant un classifieur qui puisse fournir des résultats de manière rapide à partir d'une base de données de grande taille.

On tend à satisfaire ces besoins en prévoyant un procédé de classification d'un échantillon de valeurs liées à l'utilisation d'un serveur, comprenant les étapes consistant à enregistrer par le serveur des événements d'utilisation dans un journal ; paramétrer un outil classifieur avec un modèle comportemental formé d'une liste pondérée de paramètres ; établir l'échantillon de valeurs à partir du journal et le fournir comme paramètres à l'outil classifieur, d'où il résulte que l'outil classifieur calcule un score représentatif de l'adéquation de l'échantillon à une catégorie cible ; lire des événements d'utilisation récents enregistrés dans le journal et les agréger sur des intervalles temporels élémentaires ; stocker dans une base de données le résultat d'agrégation obtenu pour chaque intervalle élémentaire dans un enregistrement distinct d'un premier groupe ; lorsque le nombre d'enregistrements du premier groupe atteint un seuil, agréger les contenus des enregistrements du premier groupe dans un enregistrement distinct d'un deuxième groupe de la base de données ; et établir l'échantillon de valeurs fourni à l'outil classifieur à partir des contenus des enregistrements de la base de données.

Selon un mode de mise en oeuvre, les enregistrements sont utilisés de manière circulaire dans chaque groupe, d'où il résulte que des valeurs anciennes contenues dans des enregistrements du premier groupe correspondent à des valeurs agrégées dans le dernier enregistrement mis à jour du deuxième groupe.

Selon un mode de mise en oeuvre, les événements d'utilisation récents sont agrégés par une lecture directe du journal au fur et à mesure que celui-ci est mis à jour par le serveur.

Selon un mode de mise en oeuvre, le procédé comprend les étapes consistant à identifier des échantillons qui sont effectivement dans la catégorie cible à la fin d'une période de référence ; configurer l'outil classifieur en mode d'apprentissage ; soumettre à l'outil classifieur les échantillons identifiés, d'où il résulte que l'outil classifieur raffine le modèle comportemental pour conformer le score calculé aux résultats effectifs ; et paramétrer l'outil classifieur avec le modèle comportemental raffiné pour calculer les scores ultérieurs.

Selon un mode de mise en oeuvre, les paramètres du modèle comportemental comprennent des variables statistiques.

Selon un mode de mise en oeuvre, les variables statistiques comprennent des tendances, des moyennes, des valeurs maximales, et des valeurs minimales sur différentes durées.

Selon un mode de mise en oeuvre, le modèle comportemental comprend des paramètres distincts pour les différents groupes d'enregistrements.

Selon un mode de mise en oeuvre, le serveur dispense un service de téléphonie, et la catégorie cible correspond à l'attrition. Le procédé comprend alors les étapes consistant à agréger les événements d'utilisation récents du journal chaque jour dans un enregistrement d'un premier groupe d'au moins sept enregistrements ; agréger les contenus des enregistrements du premier groupe dans un enregistrement d'un deuxième groupe d'au moins quatre enregistrements ; et agréger les contenus des enregistrements du deuxième groupe dans un enregistrement d'un troisième groupe d'enregistrements.

Selon un mode de mise en oeuvre, le service de téléphonie est à recharges prépayées, les paramètres du modèle comportemental comprenant la durée jusqu'à expiration de la recharge ; la durée écoulée depuis la dernière recharge ; la tendance mensuelle du nombre d'achats de recharges ; la durée écoulée depuis le dernier appel ; et la déviation mensuelle du nombre d'achats de recharges.

### Description sommaire des dessins

D'autres avantages et caractéristiques ressortiront plus clairement de la description qui va suivre de modes particuliers de réalisation donnés à titre d'exemples non limitatifs et illustrés à l'aide des dessins annexés, dans lesquels :
- la figure 1, précédemment décrite, représente un environnement classique de mise en oeuvre d'un classifieur ;
- le figure 2 représente un environnement de mise en oeuvre d'un classifieur permettant d'effectuer des estimations rapides ; et
- les figures 3A à 3C illustrent différentes phases d'agrégation de données.

### Description d'un mode de réalisation préféré de l'invention

Afin d'accélérer la préparation des données nécessaires à un outil d'exploration de données, ou classifieur, pour calculer des scores à partir d'un historique complexe et volumineux, on prévoit une solution permettant de réduire notablement la taille de l'historique pour ce qui concerne les données effectivement utilisées par le classifieur.

Pour cela, on prévoit d'agréger, dans une base de données dédiée, l'historique au fur et à mesure qu'il est alimenté par des nouveaux événements. L'agrégation peut se faire spécifiquement sur les données utiles à l'estimation, tout en effectuant des calculs intermédiaires sur celles-ci, le cas échéant.

Toutefois, lorsque l'historique est particulièrement volumineux, par exemple dans le cas d'un opérateur téléphonique ayant plusieurs millions d'abonnés, une simple agrégation peut se révéler insuffisante. On prévoit ainsi plusieurs phases d'agrégation, à savoir une agrégation sur un groupe d'intervalles courts pour les données les plus récentes, et une agrégation sur des groupes d'intervalles de plus en plus longs au fur et à mesure que les données vieillissent.

En effet, les inventeurs se sont aperçus, dans le cas des abonnés d'un opérateur téléphonique, que des réactions particulières des abonnés, comme les attritions, sont précédées d'évolutions rapides du comportement des abonnés, et qu'il est donc préférable de conserver les données récentes avec une granularité plus fine que les données plus anciennes.

La figure 2 représente un environnement de mise en oeuvre d'un procédé permettant une réduction de la taille de l'historique, qui sera décrit à titre d'exemple dans le cadre d'une infrastructure d'opérateur téléphonique. Bien que l'invention soit décrite dans ce cadre particulier, l'homme du métier constatera que son utilisation n'est pas limitée à ce cadre. L'invention s'applique à toute infrastructure stockant un historique volumineux d'événements à partir duquel on souhaite extraire des indicateurs utiles, par exemple l'historique des accès à un serveur web ou de courriel, à une base de données, etc.

Comme à la figure 1, les journaux produits par les serveurs 10 sont sauvegardés dans un entrepôt de données 14. Le procédé décrit ici n'utilise pas cet entrepôt de données. Un processus d'agrégation 20 opère de préférence sur des données lues directement sur les serveurs 10 pour récupérer au fur et à mesure les nouveaux tickets d'appel écrits dans les journaux des serveurs. Un ticket d'appel est constitué de plusieurs champs véhiculant les valeurs courantes de variables que l'opérateur souhaite surveiller, par exemple la date de l'appel, la durée de l'appel, la durée restant sur une recharge, la date d'expiration de la recharge, etc. Les valeurs souhaitées des tickets d'appel sont agrégées dans une base de données 22. Cette base de données 22 contient un seul enregistrement par abonné, et par intervalle de temps d'agrégation. Chacun de ces enregistrements contient un échantillon de valeurs des paramètres à fournir au classifieur 16, ou bien permettant de les calculer.

Le classifieur 16 est du type à apprentissage, par exemple un classifieur Bayesien, qui fait des estimations à partir d'un modèle comportemental 24. Le modèle 24, comme on l'a précédemment indiqué, est généralement sous la forme d'une liste pondérée de paramètres. On décrira ultérieurement le rôle du mode d'apprentissage du classifieur 16.

A titre d'exemple, pour travailler sur l'historique d'une année, on prévoit trois phases d'agrégation sur trois groupes d'intervalles. Le premier groupe comprend sept jours J1 à J7. Le deuxième groupe comprend huit semaines W1 à W8. Le dernier groupe comprend onze mois M1 à M11.

Le deuxième groupe pourrait comprendre quatre semaines, mais on a constaté que la semaine était la période la plus significative et qu'il était utile d'en avoir plus pour des calculs de moyennes mobiles. Ainsi, on préfère un deuxième groupe de huit, voire seize semaines.

Ainsi, on dispose de l'historique agrégé d'un an, avec une granularité d'un jour pour les valeurs les plus récentes, d'une semaine pour les valeurs d'âge intermédiaire, et d'un mois pour les valeurs les plus anciennes. Cela correspond à 26 enregistrements (un par intervalle d'agrégation), par abonné. Ce nombre est à comparer au nombre de tickets d'appel par an d'un abonné, à savoir plusieurs par jour sur 365 jours.

En outre, dans le processus d'agrégation 20, on néglige de nombreuses informations des tickets d'appel qui ne sont pas utiles aux estimations. L'agrégation journalière permet ainsi de réduire la quantité d'informations d'un facteur de l'ordre de 500. Les agrégations supplémentaires sur les groupes d'intervalles de temps plus longs pour les données anciennes, permet de gagner encore un facteur 14.

Ainsi, plusieurs téraoctets de données stockées dans l'entrepôt de données 14 pour une année sont ramenés à une quantité de l'ordre du gigaoctet que l'on peut manipuler aisément à l'aide d'outils matériels et logiciels peu coûteux, tout en garantissant un temps de réponse de l'ordre de quelques minutes pour dresser un rapport d'estimation 18 pour plusieurs millions d'abonnés.

Certains des paramètres qu'on souhaite fournir au classifieur 16 peuvent être déterminés directement à partir des tickets d'appel. On a des valeurs cumulées (par jour, par semaine, par mois), comme le nombre d'appels, la durée des appels, le nombre de recharges achetées, le montant des recharges... Il suffit d'agréger ces valeurs par incrémentation de compteurs. On a également des valeurs instantanées ou constantes sur une période donnée, comme la date d'expiration de l'abonnement ou de la recharge, le montant restant sur la recharge, la date d'abonnement, la date d'achat de la dernière recharge. On préférera enregistrer la date d'un événement sous la forme de la différence entre la date courante et la date de l'événement. Il suffit d'agréger ces valeurs par écrasement de la valeur précédente avec la valeur courante.

On souhaite en outre fournir au classifieur 16 des statistiques sur les données susmentionnées, que l'on qualifiera de « primaires ». Alors que ces paramètres statistiques peuvent être calculés à partir de l'ensemble des tickets d'appel individuels contenus dans l'entrepôt de données 14, ils ne peuvent pas tous être calculés à partir des données primaires agrégées. Ainsi, de préférence, les variables primaires sont enrichies par des variables statistiques qui ne pourront pas être calculées ultérieurement à partir des seules données primaires agrégées. Ces variables statistiques seront rajoutées dans la base de données 22 dans les mêmes enregistrements que les variables primaires. Parmi ces variables statistiques, on peut citer :
- la tendance de chaque variable primaire sur une semaine, un mois, un trimestre, une année ;
- la moyenne hebdomadaire sur un mois, un trimestre, une année ;
- le maximum et le minimum hebdomadaires sur un mois, un trimestre, une année ;
- la moyenne mobile hebdomadaire sur un mois, un trimestre ; et
- la déviation de la dernière période (semaine, mois) par rapport à la moyenne mobile.

Le rajout de ces variables aux enregistrements augmente sensiblement la quantité des données à stocker dans la base 22. Toutefois, le facteur de réduction résultant de la quantité de données par rapport à l'entrepôt 14, de l'ordre de 1000, reste largement suffisant.

D'autres variables statistiques que l'on voudrait utiliser comme paramètres pour le classifieur 16 peuvent être déterminées par calcul à partir des variables primaires et statistiques susmentionnées. Dans ce cas, il n'est pas utile de les stocker dans des enregistrements de la base de données 22. Par exemple l'écart d'une valeur primaire est déterminé en faisant la différence entre la valeur primaire dans l'intervalle d'agrégation considéré et la valeur moyenne sur l'intervalle.

La valeur de chacune des variables statistiques à enregistrer peut être déterminée, et agrégée, aux transitions entre phases d'agrégation. Par exemple, dans le cadre susmentionné utilisant trois phases d'agrégation (7 jours, 8 semaines, 11 mois), pour déterminer la tendance d'une variable sur une semaine, on prépare le calcul sur la semaine en cours, où les agrégations se font par jour. La tendance est calculée pour chaque jour comme la différence entre la valeur du jour courant Ji et la valeur du premier jour J1 de la semaine. A la fin du septième jour J7, on dispose, dans les résultats de ce jour J7, de la tendance sur la semaine qui vient de s'écouler. Les données quotidiennes de la semaine écoulée sont alors agrégées sur une semaine W1 qui devient « la semaine précédente » pour la nouvelle semaine qui commence. La tendance calculée au jour J7 devient la tendance pour la semaine W1.

De façon générale, la transition entre une phase d'agrégation à la suivante, où on passe d'une agrégation sur des intervalles courts à une agrégation sur des intervalles plus longs, est effectuée lorsqu'une agrégation de données correspondant à un intervalle plus long a été complétée à la phase précédente.

Par exemple, lorsqu'on a fini d'agréger des données de sept jours consécutifs J1 à J7, ces données sont agrégées pour former les données de la semaine W1. On commence une nouvelle agrégation quotidienne jusqu'à compléter une nouvelle semaine. Lorsqu'on atteint ainsi un mois de données agrégées sur les groupes d'intervalles J et W, ces données sont agrégées pour former les données du mois M1, et on commence un nouveau mois.

Afin de ne pas perdre de nombreuses informations récentes à chaque transition, les variables quotidiennes J et hebdomadaires W ne sont pas réinitialisées mais utilisées de manière circulaire. Il en résulte, comme on le comprendra ci-après, que les données les plus anciennes agrégées sur un premier groupe d'intervalles sont redondantes (mais disponibles avec une granularité plus fine) avec les données agrégées du dernier intervalle mis à jour du groupe suivant.

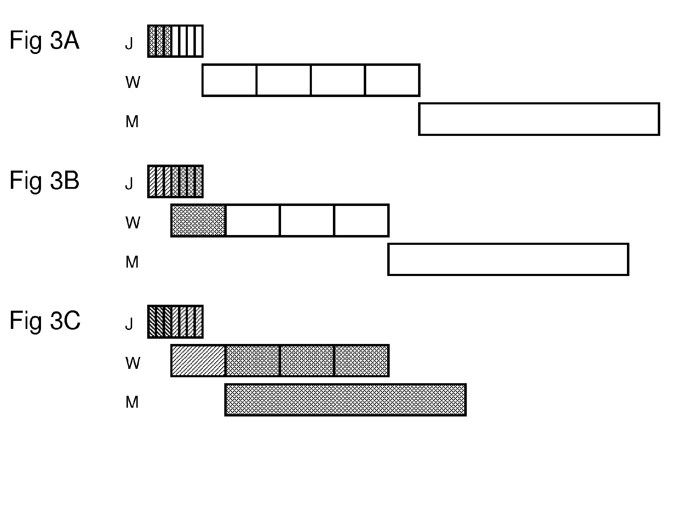

Les figures 3A à 3C illustrent trois cas rencontrés en procédant ainsi. Chaque case correspond à un intervalle d'agrégation. La longueur d'une case est représentative de la durée de l'intervalle correspondant. Les intervalles quotidiens J, hebdomadaires W et mensuels M ont été représentés sur des lignes différentes.

A la figure 3A, on commence à agréger des valeurs quotidiennes J, représentées par des cases sombres. Les variables hebdomadaires W et mensuelles M sont vides.

A la fin du jour J7, on a terminé l'agrégation quotidienne pour la semaine en cours. Les valeurs de la semaine écoulée sont agrégées dans le premier intervalle W. On commence la nouvelle semaine en écrasant les valeurs du jour J1, mais on conserve les valeurs des jours J2 à J7 précédents, qui sont écrasées au fur et à mesure que les jours s'écoulent.

On dispose ainsi, en permanence, d'une semaine glissante de données agrégées avec une granularité d'un jour, même si les informations les plus anciennes ont déjà été agrégées sur un intervalle hebdomadaire W.

A la figure 3B, on a traité trois jours J de la nouvelle semaine, représentés par des cases hachurées. Les intervalles quotidiens restants, non encore écrasés, correspondent au premier intervalle hebdomadaire W, qui a été représenté à cheval sur ces intervalles quotidiens et avec la même couleur.

On procède de façon similaire aux transitions mensuelles : lorsqu'on arrive au dernier jour du mois, les données des quatre semaines écoulées W1 à W4 et des jours J1 à Ji écoulés de la semaine en cours sont agrégées pour le mois écoulé. Les données agrégées du premier jour du mois suivant écrasent les valeurs du jour Ji+1, mais on conserve toutes les autres données quotidiennes et hebdomadaires, qui seront écrasées au fur et à mesure que le temps s'écoule.

On dispose ainsi, en permanence, d'un mois glissant de données agrégées, avec une granularité d'un jour pour les plus récentes, et d'une semaine pour les plus anciennes.

La figure 3C illustre cette situation. Des valeurs quotidiennes courantes sont agrégées dans trois intervalles quotidiens consécutifs J. Les intervalles quotidiens restants contiennent des anciennes valeurs correspondant au dernier des intervalles hebdomadaires W mis à jour, représenté à cheval sur ces intervalles quotidiens. Les autres intervalles hebdomadaires contiennent des données anciennes qui ont été agrégées dans le premier intervalle mensuel M, représenté à cheval sur ces intervalles hebdomadaires, et avec la même couleur.

Comme on l'a précédemment indiqué, les habitudes des abonnés ont tendance à changer, d'où il résulte que le modèle comportemental 24 devrait sans cesse être réajusté pour que les estimations du classifieur 16 restent pertinentes. Dans une infrastructure classique (figure 1), la préparation des données pour chaque interrogation du classifieur 16 pouvait prendre plusieurs jours. Dans ce contexte, il n'était pas envisageable d'effectuer des essais successifs ou d'utiliser les fonctionnalités d'apprentissage du classifieur pour affiner le modèle comportemental.

Le procédé d'agrégation décrit ci-dessus permettant de réduire la quantité d'informations à traiter d'un facteur considérable, le temps nécessaire à extraire et préparer les données pour le classifieur 16 se trouve réduit du même ordre. Il devient ainsi tout à fait envisageable d'utiliser la fonctionnalité d'apprentissage du classifieur de manière régulière pour ajuster le modèle 24 à l'évolution du comportement des abonnés. On procède pour cela de la manière suivante.

Au départ on initialise le modèle comportemental. Cela consiste à choisir un jeu de paramètres, un ensemble de valeurs discrètes possibles pour chaque paramètre, et à attribuer un poids à chaque paramètre. Ce choix s'effectue de manière empirique, à l'aide du savoir-faire de l'opérateur. La pertinence du modèle initial n'a pas grande importance, puisqu'on va le raffiner par apprentissages successifs.

A titre d'exemple, dans le cadre d'un service téléphonique à recharges prépayées, on a déterminé les paramètres suivants parmi les plus pertinents :
- la durée jusqu'à expiration de la recharge (valeur négative si l'expiration a eu lieu) ;
- la durée écoulée depuis la dernière recharge ;
- la tendance mensuelle du nombre d'achats de recharges ;
- la durée écoulée depuis le dernier appel ;
- la déviation mensuelle du nombre d'achats de recharges.

Ensuite, on prépare une série initiale d'échantillons, par exemple des données d'une année déjà agrégées dans la base 22, pour laquelle on a les résultats d'attrition effectifs, c'est-à-dire pour laquelle la catégorie « abonné parti » est vérifiée. Le classifieur 16 est mis en mode apprentissage (voir pointillés à la figure 2) et on l'alimente avec la série d'échantillons et la catégorie dans laquelle le classifieur aurait dû classer les échantillons, ici « abonné parti ». Le classifieur réajuste alors les poids des paramètres du modèle pour conformer son estimation aux résultats effectifs. On dispose alors d'un modèle pouvant servir de base pour les premières estimations.

En cours d'utilisation, de manière périodique, ou à chaque fois qu'on constate un nombre suffisant de nouvelles attritions, le classifieur 16 est remis en mode apprentissage, et on l'alimente avec les échantillons pour lesquels on a constaté les nouvelles attritions. Le classifieur réajuste les poids des paramètres du modèle 24, et le modèle résultant est utilisé pour les nouvelles estimations.

Pour automatiser le processus, on peut établir une condition sur les données courantes qui détermine qu'un abonné est parti. Dans le cadre d'un service téléphonique à recharges prépayées, on peut déterminer qu'un abonné est parti, par exemple, lorsqu'il n'a passé aucun appel ou n'a effectué aucune recharge depuis plus de trente jours.

Au cours des apprentissages successifs, on peut vérifier la pertinence des paramètres choisis en examinant leurs poids. Si un poids est inférieur à un seuil, on peut décider de supprimer le paramètre du modèle. On peut également définir des nouveaux paramètres et constater l'évolution de leur poids au cours des apprentissages pour déterminer s'ils sont pertinents.

## Revendications

1. Procédé de classification d'un échantillon de valeurs liées à l'utilisation d'un serveur (10), comprenant les étapes suivantes :
• enregistrer par le serveur des événements d'utilisation dans un journal (12) ;
• paramétrer un outil classifieur (16) avec un modèle comportemental formé d'une liste pondérée de paramètres ; et
• établir l'échantillon de valeurs à partir du journal et le fournir comme paramètres à l'outil classifieur, d'où il résulte que l'outil classifieur calcule un score (18) représentatif de l'adéquation de l'échantillon à une catégorie cible ;
**caractérisé en ce qu'**il comprend les étapes suivantes :
• lire des événements d'utilisation récents enregistrés dans le journal (12) et les agréger sur des intervalles temporels élémentaires (J) ;
• stocker dans une base de données (22) le résultat d'agrégation obtenu pour chaque intervalle élémentaire dans un enregistrement distinct d'un premier groupe ;
• lorsque le nombre d'enregistrements du premier groupe atteint un seuil, agréger les contenus des enregistrements du premier groupe dans un enregistrement distinct (W) d'un deuxième groupe de la base de données ; et
• établir l'échantillon de valeurs fourni à l'outil classifieur (16) à partir des contenus des enregistrements (J, W, M) de la base de données.

2. Procédé selon la revendication 1, dans lequel les enregistrements sont utilisés de manière circulaire dans chaque groupe, d'où il résulte que des valeurs anciennes contenues dans des enregistrements du premier groupe correspondent à des valeurs agrégées dans le dernier enregistrement mis à jour du deuxième groupe.

3. Procédé selon la revendication 1, dans lequel les événements d'utilisation récents sont agrégés par une lecture directe du journal (12) au fur et à mesure que celui-ci est mis à jour par le serveur (10).

4. Procédé selon la revendication 1, comprenant les étapes suivantes :
• identifier des échantillons qui sont effectivement dans la catégorie cible à la fin d'une période de référence ;
• configurer l'outil classifieur (16) en mode d'apprentissage ;
• soumettre à l'outil classifieur les échantillons identifiés, d'où il résulte que l'outil classifieur raffine le modèle comportemental (24) pour conformer le score calculé aux résultats effectifs ; et
• paramétrer l'outil classifieur avec le modèle comportemental raffiné pour calculer les scores ultérieurs.

5. Procédé selon la revendication 1, dans lequel les paramètres du modèle comportemental comprennent des variables statistiques.

6. Procédé selon la revendication 5, dans lequel les variables statistiques comprennent des tendances, des moyennes, des valeurs maximales, et des valeurs minimales sur différentes durées.

7. Procédé selon la revendication 1, dans lequel le modèle comportemental comprend des paramètres distincts pour les différents groupes d'enregistrements.

8. Procédé selon la revendication 2, dans lequel le serveur dispense un service de téléphonie, et la catégorie cible correspond à l'attrition, procédé comprenant les étapes suivantes :
• agréger les événements d'utilisation récents du journal (12) chaque jour dans un enregistrement (J) d'un premier groupe d'au moins sept enregistrements ;
• agréger les contenus des enregistrements (J) du premier groupe dans un enregistrement (W) d'un deuxième groupe d'au moins quatre enregistrements ; et
• agréger les contenus des enregistrements (W) du deuxième groupe dans un enregistrement (M) d'un troisième groupe d'enregistrements.

9. Procédé selon la revendication 8, dans lequel le service de téléphonie est à recharges prépayées, les paramètres du modèle comportemental comprenant :
• la durée jusqu'à expiration de la recharge ;
• la durée écoulée depuis la dernière recharge ;
• la tendance mensuelle du nombre d'achats de recharges ;
• la durée écoulée depuis le dernier appel ; et
• la déviation mensuelle du nombre d'achats de recharges.
